# EUROPEAN PATENT APPLICATION

(11) **EP 2 624 571 A2**
(43) Date of publication of application: **07.08.2013**
(21) Application number: 11829634.2
(22) Date of filing: 30.09.2011
(51) Int. Cl.: H04N 13/04, H04N 13/00

(54) **DISPLAY DEVICE, SIGNAL-PROCESSING DEVICE, AND METHODS THEREFOR**

(30) Priority: 01.10.2010 US 388770 P
(71) Applicant: Samsung Electronics Co., Ltd, Gyeonggi-do 443-742 (KR)
(72) Inventor: SEO, Ju-hee, Hwaseong-si Gyeonggi-do 445-757 (KR); CHO, Bong-Je, Gyeonggi-do 443-822 (KR); PARK, Hong-seok, Anyang-si Gyeonggi-do 431-050 (KR); JUNG, Kil-soo, Osan-si Gyeonggi-do 447-740 (KR); KIM, Yong-tae, Suwon-si Gyeonggi-do 443-751 (KR)
(74) Representative: Brandon, Paul Laurence
(86) International application number: PCT/KR2011/007285
(87) International publication number: WO 2012/044128

(57) **Abstract**

A display apparatus which displays a graphic object is disclosed. The present apparatus includes a video processing unit which processes a video signal and forms an image, a graphic processing unit which processes graphic data and forms a graphic object, a display unit for displaying the image and graphic object, a control unit which applies different cubic effects on each of the image and graphic object, respectively, and controls the video processing unit and graphic processing unit to maintain a state where the graphic object is displayed on an overlay layer which is above a reference layer where the image is displayed.

## Description

### CROSS-REFERENCE TO RELATED APPLICATIONS

This application claims priority from U.S. Patent Application No.61/388,770, filed on October 1, 2010, in the United States Property and Trade Office on, the disclosure of which are incorporated herein by reference.

### BACKGROUND OF THE INVENTION

### 1. Field of the Invention

Methods and apparatuses consistent with the exemplary embodiments relate to a display apparatus and signal processing apparatus and methods thereof, and more particularly to a display apparatus and signal processing apparatus which enable stable displaying of a three dimension graphic object, and methods thereof.

### 2. Description of the Prior Art

Due to the development of electronic technologies, various types of electronic apparatuses are being developed. Especially, display apparatuses such as TVs which are most widely used in general households are evolving into smart type apparatuses which have large size screens and can perform more functions than the past.

Accordingly, contents provided in display apparatuses are not limited to just broadcasting signals. For example, various kinds of applications and widjet programs may be installed and provided to users.

In addition, recently, display apparatuses having 3D (three dimension) display functions are being provided at a rapid pace. A 3D display apparatus is an apparatus which applies a cubic effect to an object being displayed on a screen, so that a user can view a more realistic screen. Accordingly, efforts are being accelerated to develop 3D contents which could be output from 3D display apparatuses.

Meanwhile, it is necessary to realize functions besides the screen output functions to be in accordance with the 3D method in order to effectively use display apparatuses having 3D display functions and to provide optimal viewing environment.

For example, various types of graphic objects such as a screen capture and OSD menu etc. are displayed to overlap the image displayed, and thus if contents having a great cubic effect is displayed, a screen reverse phenomenon may occur where it seems that the graphic object exists behind the image. Accordingly, there are times where a user feels inconvenience and dizziness when viewing 3D contents.

Therefore, there is need for a technology which could prevent the screen reverse phenomenon when a graphic object is output together with a video.

### SUMMARY OF THE INVENTION

An aspect of the exemplary embodiments relates to a display apparatus and signal processing apparatus which enable maintaining a state where a graphic object is displayed above an image output layer, and a method thereof.

According to an exemplary embodiment of the present disclosure, a display apparatus may include a video processing unit which processes a video signal and forms an image; a graphic processing unit which processes graphic data and forms a graphic object; a display unit for displaying the image and graphic object; a control unit which applies different cubic effects on each of the image and graphic object, respectively, and controls the video processing unit and graphic processing unit to maintain a state where the graphic object is displayed on an overlay layer which is above a reference layer where the image is displayed.

Herein, the display apparatus may further include a receiving unit which receives first disparity information on the reference layer and second disparity information on the overlay layer from an external source.

Herein, the control unit may control the video processing unit to apply a cubic effect to the image according to the first disparity information, and control the graphic processing unit to apply a cubic effect to the graphic object according to the second disparity information.

In addition, the receiving unit may receive a broadcasting signal which includes the video signal, graphic data, first disparity information and second disparity information, and the video processing unit and graphic processing unit may detect the first disparity information and second disparity information, respectively, from a program information table or user data region included in the broadcasting signal.

Meanwhile, the display apparatus may further include a receiving unit which receives first disparity information on the reference layer from an external source; and a disparity information creating unit which creates second disparity information on the overlay layer.

Herein, the control unit may control the video processing unit to apply a cubic effect to the image according to the first disparity information, and control the graphic processing unit to apply a cubic effect to the graphic object according to the second disparity information.

In addition, the disparity information creating unit may create the second disparity information based on the first disparity information, so that a disparity of the overlay layer is changed according to a disparity changing state of the reference layer and thus a depth difference between the overlay layer maintains a predetermined size.

In addition, the disparity information creating unit may create the second disparity information so that the overlay layer has a fixed depth.

In addition, the disparity information creating unit may detect a maximum disparity of the reference layer within an arbitrary stream unit, and create the second disparity information based on the detected information.

Furthermore, the disparity information creating unit may detect a disparity of the reference layer at a point where the graphic object is displayed, and create the second disparity information based on the detected information.

In addition, the display apparatus may further include a storage unit where a predetermined depth information is stored; and a disparity information creating unit which creates first disparity information on the reference layer and second disparity on the overlay layer, according to the depth information.

Herein, the control unit may control the video processing unit to apply a cubic effect to the image according to the first disparity information, and control the graphic processing unit to apply a cubic effect to the graphic object according to the second disparity information.

Meanwhile, the overlay layer may include a plurality of layers each having different depths, and a different kind of graphic object may be displayed on each layer.

In addition, a displaying order of a type of the graphic object displayed on each layer may be interchangeable according to a user's selection.

In addition, the graphic object may include at least one type of an OSD menu, subtitle, program information, application icon, application window, and GUI window.

According to an exemplary embodiment of the present disclosure, a signal processing apparatus may include a receiving unit which receives an input signal; a video processing unit which processes a video signal included in the input signal and forms an image to be displayed on a reference layer; an audio processing unit which processes an audio signal included in the input signal and creates sound; a graphic processing unit which processes graphic data and forms a graphic object to be displayed on an overlay layer above the reference layer; and an interface unit which transmits the image, sound, graphic object to an output means.

Herein, the video processing unit may detect first disparity information included in the input signal and apply a cubic effect to the image based on the first disparity information, and the graphic processing unit may detect second disparity information included in the input signal and apply a cubic effect to the graphic object based on the second disparity information.

In addition, the signal processing apparatus may further include a disparity information creating unit which creates the second disparity information on the overlay layer.

Herein, the video processing unit may detect the first disparity information included in the input signal and apply a cubic effect to the image based on the first disparity information, and the graphic processing unit may apply a cubic effect to the graphic object according to the second disparity information created in the disparity information creating unit.

In addition, the disparity information creating unit may create the second disparity information based on the first disparity information, so that a disparity of the overlay layer is changed according to a disparity changing state of the reference layer and thus a depth difference between the overlay layer maintains a predetermined size.

In addition, the disparity information creating unit may create the second disparity information so that the overlay layer has a fixed depth.

In addition, the disparity information creating unit may detect a maximum disparity of the reference layer within an arbitrary stream unit, and create the second disparity information based on the detected information.

In addition, the disparity information creating unit may detect a disparity of the reference layer at a point where the graphic object is displayed, and creates the second disparity information based on the detected information.

In addition, the apparatus may further include a storage unit where a predetermined depth information is stored; and a disparity information creating unit which creates first disparity information on the reference layer and second disparity on the overlay layer, according to the depth information. And the video processing unit may detect first disparity information included in the input signal and apply a cubic effect to the image based on the first disparity information, and the graphic processing unit may detect second disparity information included in the input signal and apply a cubic effect to the graphic object based on the second disparity information.

Meanwhile, the overlay layer may include a plurality of layers each having different depths, and a different kind of graphic object may be displayed on each layer.

In addition, a displaying order of a type of the graphic object displayed on each layer may be interchangeable according to a user's selection.

In addition, the graphic object may include at least one type of an OSD menu, subtitle, program information, application icon, application window, and GUI window.

Meanwhile, according to an exemplary embodiment of the present disclosure, a signal processing method may include processing a video signal and forming an image to be displayed on a reference layer; processing graph data and forming a graphic object to be displayed on an overlay layer above the reference layer; and transmitting the image and graphic object to an output means.

Herein, the signal processing method may further include receiving first disparity information on the reference layer and second disparity information on the overlay layer from an external source. Herein, the image may be formed as a cubic effect is applied thereto according to the first disparity information, and the graphic object may be formed as a cubic effect is applied thereto according to the second disparity information.

In addition, the receiving may include receiving a broadcasting signal which includes the video signal, graphic data, first disparity information and second disparity information; and detecting the first disparity information and second disparity information from a program information table or user data region included in the broadcasting signal, respectively.

In addition, the method may further include receiving first disparity information on the reference layer from an external source; and creating second disparity information on the overlay layer.

Herein, the image may be formed as a cubic effect is applied thereto according to the first disparity information, and the graphic object may be formed as a cubic effect is applied thereto according to the second disparity information.

In addition, the creating the second disparity information may include analyzing the first disparity information and checking a disparity changing state of the reference layer; and creating the second disparity information based on the first disparity information, so that a disparity of the overlay layer is changed according to a disparity changing state of the reference layer and thus a depth difference between the overlay layer maintains a predetermined size.

Herein, the second disparity information may be created so that the overlay layer has a fixed depth.

In addition, the second disparity information may be created based on a maximum disparity of the reference layer detected within an arbitrary stream unit.

In addition, the second disparity information may be created based on a disparity of the reference layer detected at a point where the graphic object is displayed.

Meanwhile, the signal processing method may further include reading the depth information from a storage unit where a predetermined depth information is stored; and creating first disparity information on the reference layer and second disparity information on the overlay layer, according to the depth information.

Herein, the image may be formed as a cubic effect is applied thereto according to the first disparity information, and the graphic object may be formed as a cubic effect is applied thereto according to the second disparity information.

In addition, the overlay layer may include a plurality of layers each having different depths, and a different kind of graphic object may be displayed on each layer.

In addition, a displaying order of a type of the graphic object displayed on each layer may be interchangeable according to a user's selection.

In addition, the graphic object may include at least one type of an OSD menu, subtitle, program information, application icon, application window, and GUI window.

According to the aforementioned various exemplary embodiments of the present disclosure, it is possible to maintain a state where the graphic object is displayed on an upper layer than the layer where the image is output. Therefore, it is possible to prevent the screen reverse phenomenon where the location of 3D contents and the location of the graphic object change.

### BRIEF DESCRIPTION OF THE DRAWINGS

The above and/or other aspects of the present disclosure will be more apparent by describing certain present disclosure with reference to the accompanying drawings, in which:

FIG. 1 is a view for explaining a configuration of a display apparatus according to an exemplary embodiment of the present disclosure;

FIG. 2 is a view for explaining a relationship of a reference layer and a plurality of overlay layers ;

FIGs. 3 to 5 are views illustrating configurations of display apparatuses according to various exemplary embodiments of the present disclosure;

FIGs. 6 to 8 are views for explaining various exemplary embodiments for fixating a disparity of an overlay layer;

FIGs. 9 and 10 are views for explaining an exemplary embodiment which flexibly changes a disparity of an overlay layer;

FIG. 11 is a view illustrating an example of a UI for changing a state of an overlay layer;

FIGs. 12 to 14 are views illustrating signal processing apparatuses according to various exemplary embodiments of the present disclosure;

FIG. 15 is a block diagram illustrating a configuration of a broadcasting transmitting apparatus according to an exemplary embodiment of the present disclosure;

FIGs. 16 and 17 are views for explaining a display state which is changed according to contents of a program information table; and

FIG. 18 is a flowchart for explaining signal processing methods according to various exemplary embodiments of the present disclosure.

### DETAILED DESCRIPTION

Certain exemplary embodiments are described in higher detail below with reference to the accompanying drawings.

In the following description, like drawing reference numerals are used for the like elements, even in different drawings. The matters defined in the description, such as detailed construction and elements, are provided to assist in a comprehensive understanding of exemplary embodiments. However, exemplary embodiments can be practiced without those specifically defined matters. Also, well-known functions or constructions are not described in detail since they would obscure the application with unnecessary detail.

Although a few embodiments of the present invention have been shown and described, it would be appreciated by those skilled in the art that changes may be made in this embodiment without departing from the principles and spirit of the invention, the scope of which is defined in the claims and their equivalents.

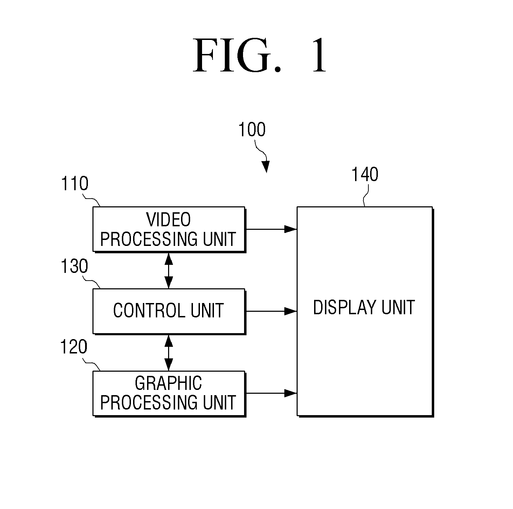

FIG. 1 is a block diagram illustrating a configuration of a display apparatus according to an exemplary embodiment of the present disclosure. According to FIG. 1, the display apparatus 100 includes a video processing unit 110, graphic processing unit 120, control unit 130, and display unit 140.

Display apparatuses refer to various types of apparatuses having display functions such as a TV, PC, digital photo frame, PDA, mobile phone, notebook PC, tablet PC, and e-book.

The video processing unit 110 is a portion which processes a video signal and forms an image. Such a video signal may be detected from a broadcasting signal transmitted from a broadcast transmitting apparatus, or may be a signal provided from various external sources such as a web server, internal or external storage medium, or playing apparatus.

The video signal may be a stereo image for a 3D output. A stereo image refers to one or more images. For example, two images obtained by photographing a subject in two different angles, that is, a first input image and second input image may be a stereo image. For convenience of explanation, the first input image will be referred to as a left eye image (or left side image), and the second input image will be referred to as a right eye image (or right side image). In a case where a stereo image which includes both a left eye image and right eye image is transmitted from various aforementioned sources, the video processing unit 110 may decode each data and create a left eye image frame and right eye image frame which form one 3D image.

Meanwhile, the video signal may be a 2D image. In this case, the video processing unit 110 may perform various signal processings such as decoding, deinterleaving, and scaling on the 2D image, and form one image frame.

On the other hand, in a case of wanting to perform a 3D output even when a 2D image is input, the video processing unit 110 may have an image frame formed from the input 2D image as a reference frame, and shift locations of pixels of each object in that frame, to form a new frame. Herein, the reference frame may be used as a left eye image frame, and the new frame having a disparity may be used as a right eye image frame.

The graphic processing unit 120 may process graphic data and form a graphic object. Herein, the graphic object may be a subtitle or closed caption corresponding to an image. In addition, the graphic object is not limited to a subtitle or closed caption but various types of objects such as an OSD menu, program information, application icon, application window, and GUI window may be created by the graphic processing unit 120.

The control unit 130 may control the video processing unit 110 and graphic processing unit 120 to apply cubic effects to the image formed in the video processing unit 110 and to each of the graphic objects formed in the graphic processing unit 120 to prevent the screen reverse phenomenon. More specifically, in a case of forming an image in a 3D method in the video processing unit 110, the control unit 130 may control each of the video processing unit 110 and the graphic processing unit 120 to maintain a state where a graphic object is displayed on a layer having a deeper effect than a layer where that 3D image is displayed.

Hereinafter, the layer where an image is displayed is referred to as a reference layer, and the layer where a graphic object is displayed is referred to as an overlay layer.

On the overlay layer, various types of graphic objects having graphic elements other than images may be displayed. A disparity of the overlay layer may be determined to be a greater value than the reference layer where images are displayed. More specifically, the disparity is determined to be a value which may guarantee that a reverse doesn't take place.

The display unit 140 displays the image frame formed in the video processing unit 110 and the graphic object formed in the graphic processing unit 120, on a screen.

Herein, the display unit 140 may display the left eye image frame and the right eye image frame in turns to display the image in 3D. In addition, the display unit 140 may display the left eye graphic object and the right eye graphic object in turns to display the graphic object in 3D.

Meanwhile, in a case where the display apparatus 100 is embodied as a 3D display apparatus with a non-spectacle method, the video processing unit 110 may form the image into a multiview image, and the graphic processing unit 120 may form the graphic object into a multiview object.

In this case, the display unit 140 may output the multiview image and multiview object in separate spaces so that one could sense a distance from the subject even without wearing glasses and perceive as a 3D image. More specifically in this case, the display unit 140 may be embodied as a display panel according to a Parallax Barrier technology or Lenticular technology.

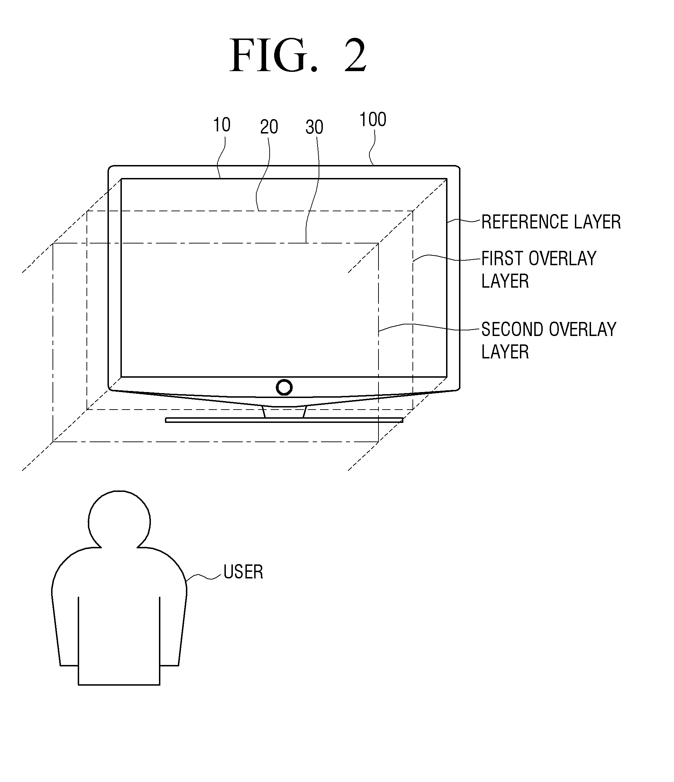

FIG. 2 illustrates an example of a state where a reference layer and overlay layer are displayed. According to FIG. 2, on the screen of the display apparatus 100, an image and graphic object are output in a 3D method. In the case of a 3D method, various depth effects are displayed according to the disparity. In a case where various objects having different depth effects exist, each depth effect may be referred to as a layer or plane. Of a plurality of layers, the reference layer 10 where the image is displayed is a base, and above that layer, at least one or more overlay layers 20, 30 may be provided. FIG. 2 illustrates one reference layer 10, but in a case where the image is displayed in 3D, the reference layer 10 may be provided in plural. Herein, even a lowermost overlay layer 20 of the entirety of overlay layers is formed to have at least a same depth effect as an uppermost reference layer 10 or a more deeper effect than the upper most reference layer 10. Accordingly, even when the 3D contents have a great cubic effect, the graphic object is always displayed to seem closer to the user than the image, preventing a reverse phenomenon.

As aforementioned, various types of graphic objects may all be displayed on one overlay layer, or displayed separately on a plurality of overlay layers having different depth effects according to the type.

Meanwhile, disparity information of the reference layer and disparity information of the overlay layer may be provided in various methods.

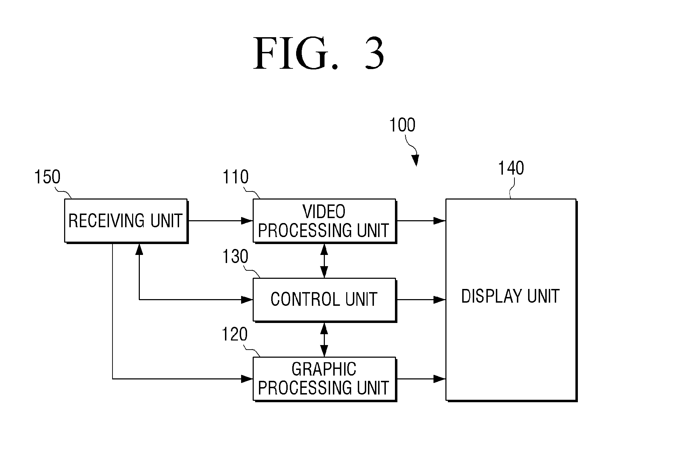

FIG. 3 is a block diagram illustrating a detailed configuration example of a display apparatus according to an exemplary embodiment of the present disclosure. According to FIG. 3, the display apparatus 100 may include a video processing unit 110, graphic processing unit 120, control unit 130, display unit 140 and receiving unit 150.

According to an exemplary embodiment, the receiving unit 150 may receive first disparity information on the reference layer and second disparity information on the overlay layer from an external source.

Herein, the external source may be a broadcasting station which transmits a broadcasting signal, or one of various apparatuses such as other storage medium, external server, and playing apparatus. The external source may set a size of the second disparity information to be greater than the first disparity information so that the graphic object is always displayed above the image and then transmit the disparity information.

In a case where the first disparity information and second disparity information are both received by the receiving unit 150, the control unit 130 may control the video processing unit 110 to apply a cubic effect to the image according to the first disparity information, and control the graphic processing unit 120 to apply a cubic effect to the graphic object according to the second disparity information. Herein, the first disparity information indicates information on a depth of a video or information on disparity which may be referred to based on a display of the overlay layer. In addition, the second disparity information refers to an explicit value which indicates a depth or disparity of the overlay layer. Using such first and second disparity information, the display apparatus 100 may express the image and graphic object in a 3D method without causing a screen reverse phenomenon.

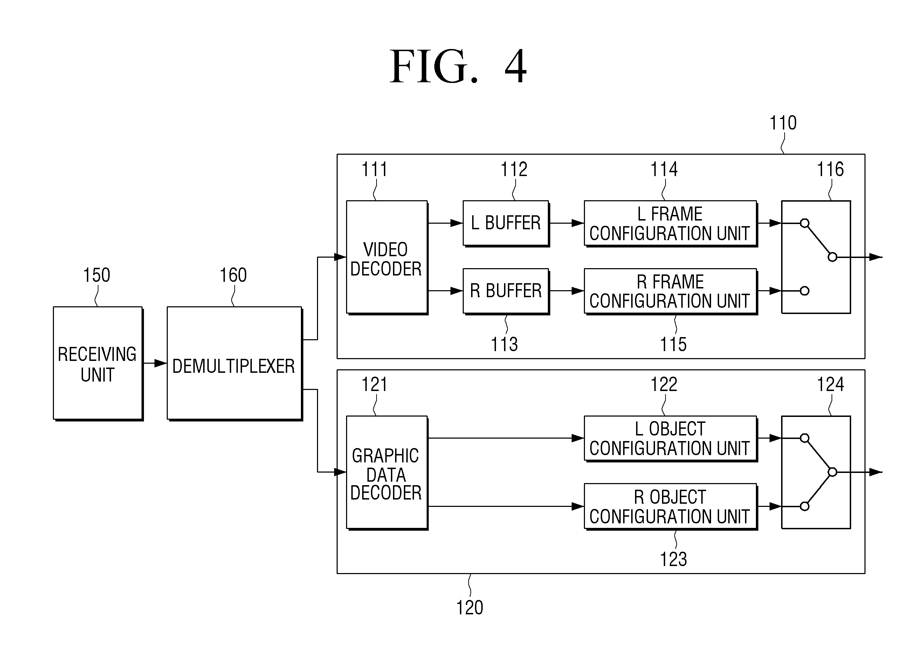

FIG. 4 illustrates a configuration example of the display apparatus 100 for explaining a detailed configuration of the video processing unit 110 and graphic processing unit 120. According to FIG. 4, the display apparatus includes the video processing unit 110, graphic processing unit 120, receiving unit 150, and a demultiplexer 160.

Herein, the demultiplexer 160 refers to an element for detecting a video signal and graphic data from a broadcasting signal received through the receiving unit 150. That is, as aforementioned, the receiving unit 150 may receive a broadcasting signal which includes a video signal, graphic data, first disparity information and second disparity information. In addition, although not illustrated in FIG. 4, various elements such as an antenna, RF down converter, demodulator, and equalizer may be provided in the receiving unit 150. Accordingly, it is possible to down convert a received RF signal into a middle band, perform demodulation and equalization to restore the signal, and then provide the signal to the demultiplexer 160.

The demultiplexer 160 demultiplexes the provided signal, and provides the video signal to the video processing unit 110 and the graphic data to the graphic processing unit 120.

Meanwhile, although not illustrated in FIGs. 1, 3, and 4, in a case of the broadcasting signal, an audio signal is included, and thus an audio processing unit (not illustrated) may be further included. However, since an audio signal is not directly related to graphic object processing, illustration and explanation on an audio signal is omitted.

Meanwhile, the first disparity information and second disparity information may be recorded in a predetermined region provided in the broadcasting signal. For example, in the broadcasting signal, a program information table region where program information is recorded, and a user data region which can be used by a broadcasting operator or users at their discretion may be provided. The first and second disparity information may be transmitted using these effective regions. Explanation thereon shall be made in detail hereinafter.

According to FIG. 4, the video processing unit 110 includes a video decoder 111, L buffer 112, R buffer 113, L frame configuration unit 114, R frame configuration unit 115, and first switch 116.

The video decoder 111 decodes the video signal provided from the demultiplexer 160. More specifically, various decodings such as RS decoding, viterbi decoding, turbo decoding, and trellis decoding, or combinations thereof may be made. In addition, although not illustrated in FIG. 4, in a case where data interleaving is made during transmission, a deinterleaver which performs deinterleaving may be provided in the video processing unit 110.

The left eye image data of among the data decoded in the video decoder 111 is stored in the L buffer 112, while the right eye image data is stored in the R buffer 113.

The L frame configuration unit 114 creates a left eye image frame using the data stored in the L buffer 112. In addition, the R frame configuration unit 115 creates a right eye image frame using the data stored in the R buffer 113.

The first switch 116 outputs alternately a left eye image frame and right eye image frame each of which is formed by the L frame configuration unit 114 and R frame configuration unit 115, respectively. Herein, between the left eye image frame and right eye image frame, a black frame may be displayed. In addition, at every output, not only one left eye image frame and one right eye image frame may be output but a same number of a plurality of left eye image frames and a same number of a plurality of right eye image frames may be output.

Meanwhile, the graphic processing unit 120 includes a graphic data decoder 121, L object configuration unit 122, R object configuration unit 123, and second switch 124.

The graphic data decoder 121 decodes graphic data provided from the demultiplexer 160. A decoding method may correspond to a decoding method applied to the transmitting side, or such a data encoding and decoding method may be one that has been directly applied from a well known technology. Therefore, a detailed explanation on the decoding method and configuration method is omitted.

Each of the data decoded in the graphic data decoder 121 is provided to the L object configuration unit 122 and R object configuration unit 123. Although not illustrated in FIG. 4, it is obvious that an L buffer and R buffer may be provided and used in the graphic processing unit 120 as well. A disparity between the left eye graphic object and right eye graphic object formed in the L object configuration unit 122 and R object configuration unit 123 is maintained to be greater than a disparity between formed in the L frame configuration unit 114 and R frame configuration 115.

The second switch 124 is interlinked with the first switch 116, and outputs alternately the left eye graphic object and right eye graphic object formed in the L object configuration unit 122 and R object configuration unit 123. Accordingly, the image and the graphic object corresponding thereto may be overlapped and expressed in a 3D method having different depth effects.

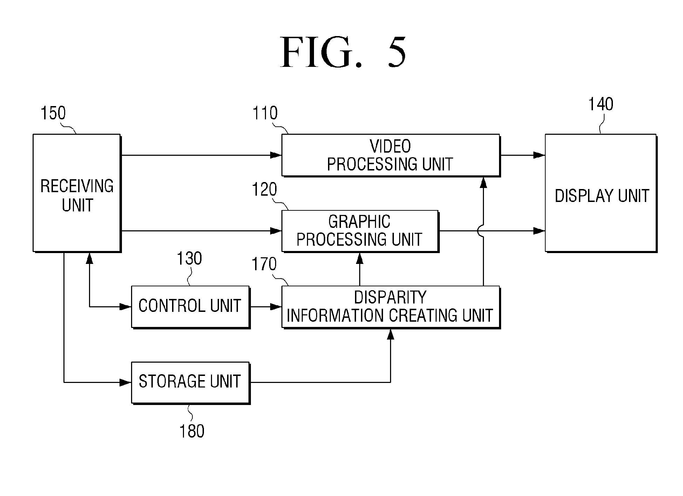

FIG. 5 is a block diagram illustrating a configuration of a display apparatus according to another exemplary embodiment of the present disclosure. According to FIG. 5, the display apparatus includes a video processing unit 110, graphic processing unit 120, control unit 130, display unit 140, receiving unit 150, disparity information creating unit 170, and storage unit 180.

The receiving unit 150 may receive data to be output from the display apparatus.

More specifically, the display apparatus may receive the data from various sources such as a broadcasting station, web server, storage medium, and playing apparatus.

Information related to the depth effect may be included in the received data. That is, the receiving unit 150 may receive the first disparity information on the reference layer from the external source.

Accordingly, the control unit 130 may control the video processing unit 110 to apply a cubic effect to the image according to the first disparity information received.

Meanwhile, information on the depth effect of the overlay layer where the graphic object is to be displayed may not be included. As such, in a case where only the first disparity information on the reference layer may be received through the receiving unit 150 , the disparity information creating unit 170 may be used.

That is, the disparity information creating unit 170 creates second disparity information on the overlay layer. The control unit 130 may control the graphic processing unit 120 to apply a cubic effect to the graphic object according to the second disparity information created in the disparity information creating unit 170.

The second disparity information may be created in various methods according to exemplary embodiments.

That is, in a case where the image is expressed in 3D, the disparity of the reference layer may be changed every hour. The disparity information creating unit 170 may analyze and then check the first disparity information, and create second disparity information using the checked result.

In this case, there may be a fixed type where the disparity of the overlay layer is fixed regardless of the disparity change of the reference layer, and a flexible type where the disparity of the overlay layer is changed according to the disparity change of the reference layer.

In a case of the fixed type, the disparity information creating unit 170 may create second disparity information so that the overlay layer always has a fixed depth.

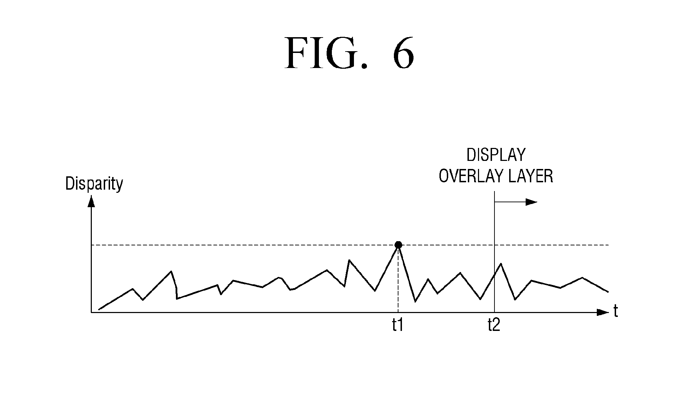

FIGs. 6 to 8 illustrate various examples on determining a fixed disparity of the overlay layer in a display apparatus.

FIG. 6 illustrates a peak value of the disparity of the reference layer according to time.

As illustrated in FIG. 6, the disparity information creating unit 170 may detect a maximum disparity of the reference layer within an arbitrary stream unit, and create second disparity information based on the detected information. The stream unit may be a GoP (Group of Picture), or a broadcasting program unit, determined packet number unit, or fixed time unit etc..

As illustrated in FIG. 6, when an event to display a graphic object occurs at t2 point, the maximum disparity of the reference layer is checked. Accordingly, when it is determined that a t1 point has the maximum disparity, the disparity information creating unit 170 determines the disparity of t1 or the disparity increased by a predetermined value from that value as the disparity of the overlay layer, and may create the second disparity information accordingly.

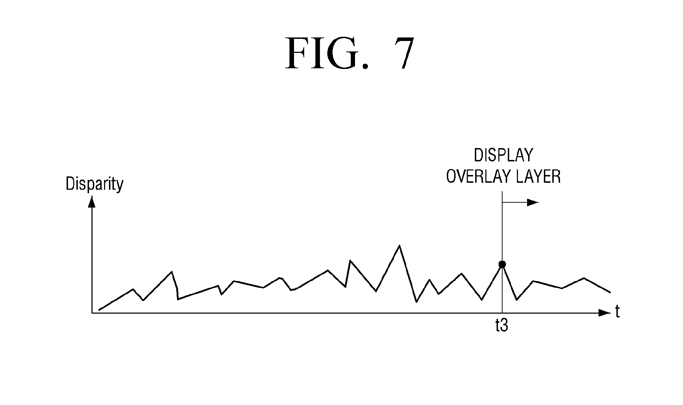

Otherwise, as illustrated in FIG. 7, the disparity information creating unit 170 may use the reference layer at a t3 point, and create the second disparity information. That is, the second disparity information may be determined to have a fixed depth effect as a same level of that of the reference layer at a point where the image and the object are to be displayed together.

An event where such an overlay layer is displayed may be when a subtitle is input, when a checking command for checking an OSD menu or icon is input, or when an application or widjet is executed and displayed on a UI window etc., furthermore, it may include any case where a graphic object is to be displayed. Meanwhile, as aforementioned, the number of the overlay layer may be plural.

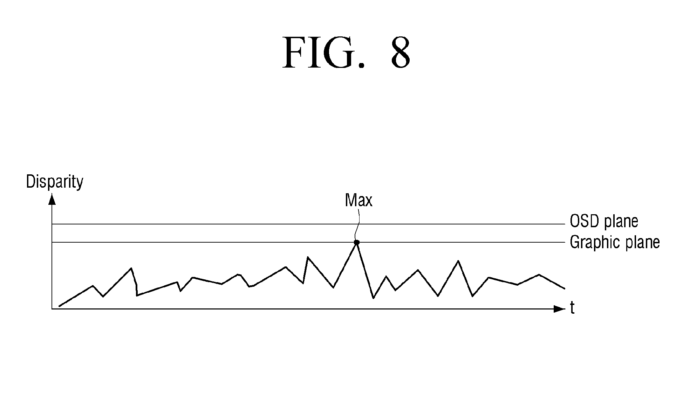

FIG. 8 illustrates a method where the disparity of each of the plurality of overlay layers is determined fixatedly. According to FIG. 8, the disparity of a first overlay layer where the subtitle is displayed, that is the disparity of a graphic plane is determined to be a same value of the maximum disparity of the reference layer. On the other hand, a second overlay layer where an OSD menu is displayed, that is an OSD plane has a disparity which is a little greater than the first overlay layer. Accordingly, it is possible to have different depth effects according to the type of graphic objects.

Meanwhile, as another example, the disparity information creating unit 170 may create the second disparity information in such a manner that the overlay layer may have a flexible depth effect. That is, the disparity information creating unit 170 may create the second disparity information based on the first disparity information so that the disparity of the overlay layer is changed according to the state of change of the disparity of the reference layer and thus the difference of depth maintains a predetermined size.

FIG.s 9 and 10 are views explaining a method for flexibly determining a disparity of an overlay layer in a display apparatus.

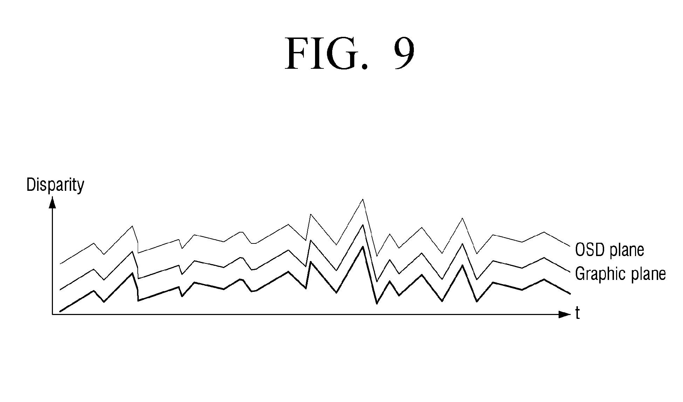

According to FIG. 9, the disparity of the reference layer is changed continuously every hour, and the disparity of the overlay layer is changed to maintain a certain distance based on the reference layer.

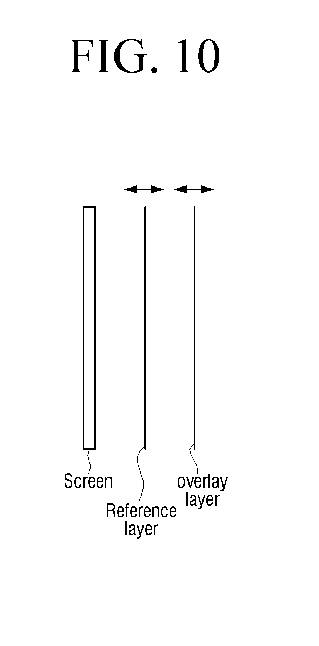

FIG. 10 illustrates a state where the depth effect of the reference layer is changed in an up and down direction based on the screen of the display apparatus, and the depth effect of the overlay layer is also changed in an up and down direction.

As aforementioned, in a case where only the first disparity information is provided from outside, the second disparity information may be determined fixatedly or flexibly using the first disparity information.

Meanwhile, although the aforementioned explanation is based on when only the first disparity information is provided, it is not limited thereto. That is, the first disparity information may be created based on the second disparity information also in a case where only the second disparity information is provided. Also in this case, it is obvious that the disparity of the reference layer may be determined flexibly or fixatedly.

Meanwhile, in another exemplary embodiment, the second disparity information itself may be predetermined as a value and stored in the storage unit 180. In this case, the disparity information creating unit 170 may create the second disparity information with the value stored in the storage unit 180 regardless of the first disparity information.

Meanwhile, according to another exemplary embodiment, there may be a case where neither the first disparity information nor second disparity information is provided from outside. In this case, the disparity information creating unit 170 may use the predetermined disparity information to create the first and second disparity information.

That is, an arbitrarily determined information or disparity information may be stored in the storage unit 180. For example, assuming the depth of the screen is 0, the reference layer may be set so that the disparity changes within the range of -10 ∼ +10 pixel, while the second overlay layer is set so that the disparity is approximately +20. Such a disparity may have various sizes according to the type of the display apparatus. That is, in a case of a TV having a big screen, disparity information may be set to be greater than that of a small display apparatus such as a mobile phone.

The disparity information creating unit 170 may create the first and second disparity information according to the depth information stored in the storage unit 180, and provide it to the video processing unit 110 and graphic processing unit 120.

Otherwise, the disparity information creating unit 170 may compare the left eye image frame and right eye image frame formed in the video signal and check the distance between the matching points, and analyze the disparity of the reference layer.

That is, the disparity information creating unit 170 divides the left eye image frame and the right eye image frame into a plurality of blocks, and compares a pixel representative value of each block. The disparity information creating unit 170 determines blocks of which pixel representative values fall within a similar value as matching points. Accordingly, a depth map is created based on the moving distance among the determined matching points. That is, a location of a pixel which form a subject in the left eye image and a location of a pixel in the right eye image are compared to each other, and their difference is calculated. Accordingly, an image having a grey level corresponding to the calculated difference, that is, a depth map is created.

A depth may be defined as a distance between a subject and a camera, distance between a subject and a recording medium (for example, a film) where an image of the subject is formed, and a degree of a cubic effect etc.. Therefore, a difference of distance between points of a left eye image and right eye image corresponds to a disparity, and the greater the disparity, the greater the cubic effect. A depth map refers to a change of state of such depth formed as one image.

The disparity information creating unit 170 may determine the disparity information of the overlay layer based on such a depth map, and determine the second disparity information either fixatedly or flexibly.

Meanwhile, as aforementioned, the overlay layer may be provided in plural, and in each overlay layer, a different type of graphic object may be displayed.

For example, a graphic object such as an OSD menu may be displayed on an uppermost overlay layer, while a graphic object such as a subtitle may be displayed on an overlay layer which is located under the uppermost overlay layer. Such an order of display may be changed at a user's selection.

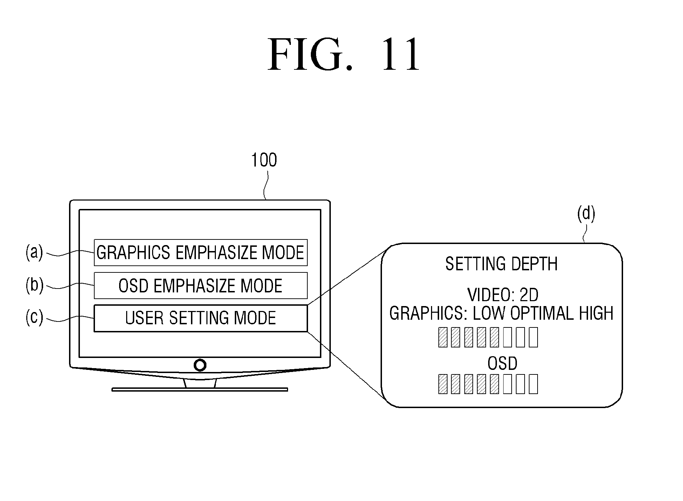

FIG. 11 is an example of a UI (User Interface) which enables changing the order of displaying graphic objects.

According to FIG. 11, a plurality of menus a, b, c are displayed on a screen of the display apparatus 100. When the user selects an emphasize mode a, a graphic object such as a subtitle may be arranged on the uppermost overlay layer, and the rest of the graphic objects may be displayed under that uppermost overlay layer. Otherwise, when an OSD emphasize mode b is selected, a graphic object such as an OSD menu may be arranged on the uppermost overlay layer, and the rest of the graphic objects may be displayed under that uppermost overlay layer.

Otherwise, the user may directly set depths of each graphic object by selecting a user setting mode c. That is, as illustrated in FIG. 11, when the user setting mode c is selected, a new UI d is displayed. The user may directly set a depth of a graphic subtitle and depth of an OSD menu on the UI d. In this case, it is possible to set the depth using a bar graph as in FIG. 11, but the user may directly input numbers or texts and set the depth.

Meanwhile, the aforementioned explained operations performed in a display apparatus, but these operations may also be performed in other apparatuses that do not have display means. Hereinafter is an explanation on a configuration of a signal processing apparatus, as an example of an apparatus that does not have any display means.

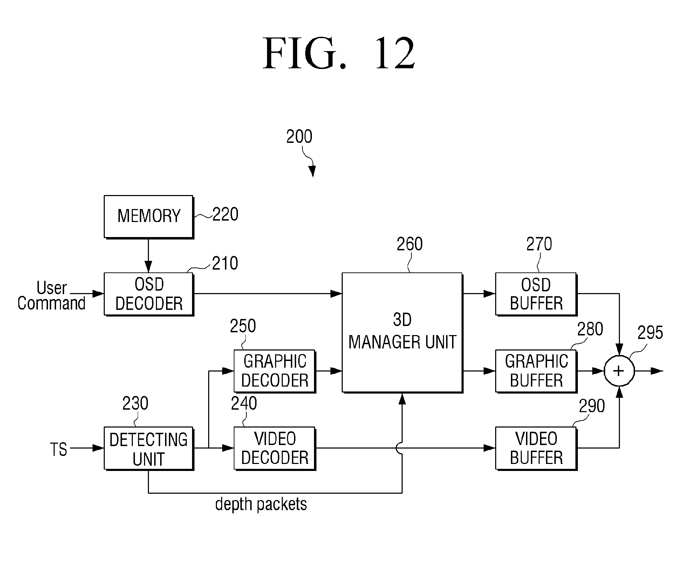

FIG. 12 is a block diagram illustrating a configuration of a signal processing apparatus according to an exemplary embodiment of the present disclosure. According to FIG. 12, a signal processing apparatus 200 includes an OSD decoder 210, memory 220, PID filter 230, video decoder 240, graphic decoder 250, 3D manager unit 260, OSD buffer 270, graphic buffer 280, video buffer 290, and mux 295. Herein, the signal processing apparatus may be a set top box or a playing apparatus which plays various types of storage medium such as DVD, blue ray, and VCR. The signal processing apparatus may also be embodied as a chip or module installed in various apparatuses.

The OSD decoder 210 reads OSD data from the memory 220 at a user's command, decodes the OSD data, and provides the decoded OSD data to the 3D manager unit 260. The 3D manager unit 260 creates a left eye OSD object and right eye OSD object using the provided OSD data. In this case, a disparity between the left eye OSD object and right eye OSD object is set to be adjusted to the disparity of the overlay layer where the OSD menu is to be displayed. The created left eye and right eye OSD menu are stored in the OSD buffer 270.

Meanwhile, when a transport stream (TS) received, the detecting unit 230 processes it, and divides graphic data and video data. More specifically, in a case where the transport stream is a stream according to MPEG-2 standard, the detecting unit 230 detects a program unique information (PSI) table from an MPEG-2 transport stream.

Accordingly, all types of PSI data such as ATSC program and system information protocol (PSIP) table, DVB service information (SI), conditional access table (CAT), DSM-CC message, private table data etc. may be obtained using a PID filter (Program Identifier filter). The detecting unit 230 may divide the video data and graphic data using the obtained data. Meanwhile, the detecting unit 230 detects depth packets related to the disparity information of the overlay layer and provides it to the 3D manager unit 260.

The graphic data is provided to the graphic decoder 250. The graphic decoder 250 decodes the graphic data and provides it to the 3D manager unit 260. The 3D manager unit 260 creates a left eye graphic object and right eye graphic object using the depth packets provided from the detecting unit 230 and the decoded graphic data. The disparity between the left eye and right eye graphic object is set adjustably to the disparity of the overlay layer. The created left eye and right eye graphic object are stored in the graphic buffer 280. As such, information on the disparity of the overlay layer may be transmitted to a same stream as the video signal, or to a separate stream.

Meanwhile, the video decoder 240 decodes the video data and provides it to the video buffer 290. In a case where the video signal included in the TS is a 2D signal, a 2D image frame is stored in the video buffer 290. On the other hand, in a case where the video frame itself includes the left eye image frame and right eye image frame, the left eye image frame and right eye image frame may be stored in the video buffer 290 without any additional 3D conversion process. Although omitted in FIG. 12, in a case where a 3D image conversion module is further included, it is a matter of course that even if a 2D video signal is input, it is possible to create a left eye image frame and right eye image frame using the 2D video signal.

As aforementioned, each data stored in the OSD buffer 270, graphic buffer 280, and video buffer 290 are combined by the mux 295 to form screen data. The formed data may either be transmitted to external display means through a separately provided interface, or be stored in a separately provided storage unit.

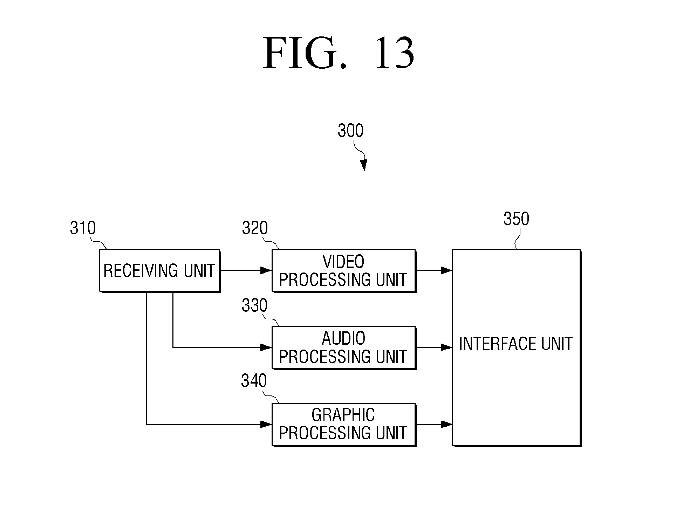

FIG. 13 is a block diagram illustrating another configuration of a signal processing unit. According to FIG. 13, the signal processing unit 300 includes a receiving unit 310, video processing unit 320, audio processing unit 330, graphic processing unit 340, and interface unit 350.

The receiving unit 310 receives an input signal. Herein, the input signal may not only be a broadcasting signal transmitted from a broadcasting station but also a multimedia signal provided from an internal or external storage medium or a playing apparatus.

The video signal included in the input signal received in the receiving unit 310 is provided to the video processing unit 320. The video processing unit 320 processes the video signal and forms an image which may be displayed on the reference layer.

Meanwhile, the audio processing unit 330 processes the audio signal included in the input signal and creates sound.

The graphic processing unit 340 processes the graphic data and forms the graphic object to be displayed on the overlay layer above the reference layer. Herein, the graphic data may be subtitle data which is included in the input signal, or data provided from other sources. For example, it may be an OSD menu, various icons, and window etc.

Data processed in each processing unit is transmitted to the output means by the interface unit 350.

Meanwhile, as explained in the various aforementioned exemplary embodiments, at least one of the disparity information on the video data, that is the first disparity information and the disparity information on the graphic data, that is the second disparity information may be provided from outside, or neither may be provided at all.

For example, in a case where the first and second disparity information are included in the input signal, the video processing unit 320 detects the first disparity information from the input signal, and applies a cubic effect to the image based on the detected first disparity information. Meanwhile, the graphic processing unit detects the second disparity information included in the input signal and applies a cubic effect to the graphic object based on the second disparity information.

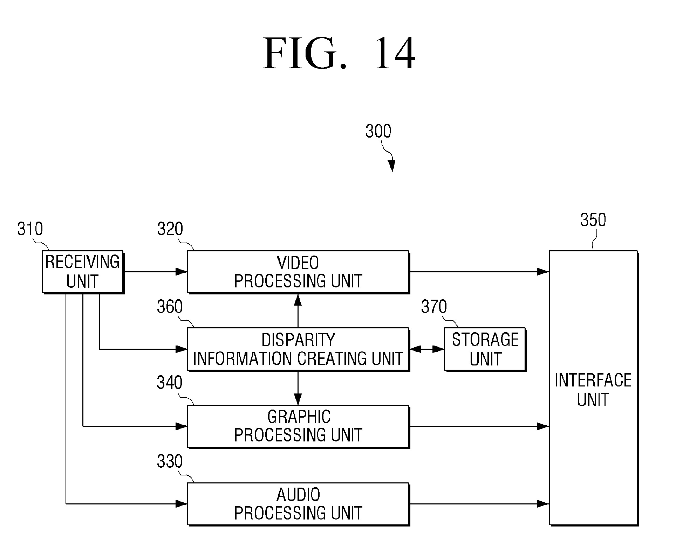

FIG. 14 is a block diagram illustrating an example of a configuration of a signal processing apparatus in a case where at least one of the first and second disparity information is not provided. According to FIG. 14, the signal processing unit 300 includes a receiving unit 310, video processing unit 320, audio processing unit 330, graphic processing unit 340, interface unit 350, disparity information creating unit 360, and storage unit 370.

In a case where only the first disparity information is included in the input signal, the disparity information creating unit 360 creates the second disparity information on the overlay layer.

More specifically, the disparity information creating unit 360 creates the second disparity information so that the disparity of the overlay layer is changed according to the state of change of the disparity of the overlay layer. That is, the disparity information creating unit 360 may flexibly change the depth of the overlay layer as aforementioned.

Otherwise, the disparity information creating unit 360 may create the second disparity information so that the overlay layer has a fixed depth.

This was explained in detail in the aforementioned FIGs. 6 to 10, and thus repeated explanation is omitted.

The disparity information creating unit 360 provides the created second disparity information to the processing unit 340. The graphic processing unit 340 applies a cubic effect to the graphic effect according to the second disparity information created in the disparity information creating unit 360.

Meanwhile, according to another exemplary embodiment, neither first disparity information nor second disparity information may be included in the input signal.

In this case, the disparity information creating unit 360 creates the first and second disparity information using the depth information stored in the storage unit 370.

Accordingly, the video processing unit 320 and graphic processing unit 340 apply a cubic effect to the image and graphic object using the first and second disparity information, respectively.

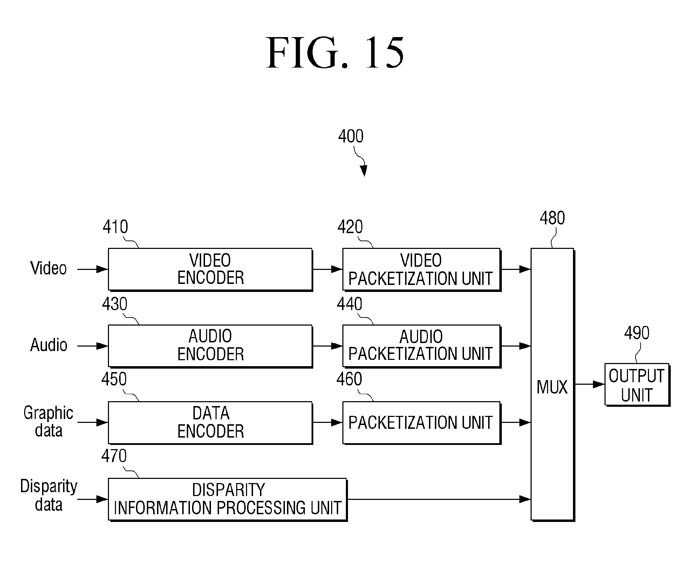

FIG. 15 is a block diagram illustrating a configuration of a transmitting apparatus according to an exemplary embodiment of the present disclosure. According to FIG. 15, the transmitting apparatus 400 includes a video encoder 410, video packetization unit 420, audio encoder 430, audio packetization unit 440, data encoder 450, packetization unit 460, disparity information processing unit 470, mux 480, and output unit 490.

The video encoder 410, audio encoder 430, and data encoder 450 encode video data, audio data, and general data, respectively.

Each of the video packetization unit 420, audio packetization unit 440, and packetization unit 460 forms packets which include encoded data. More specifically, they form a plurality of packets including a header, payload, and parity etc..

The mux 480 muxes each packet formed. More specifically, the mux 480 combines a plurality of packets provided from the video packetization unit 420, audio packetization unit 440, and packetization unit 460 in as many as a predetermined number.

The output unit 490 performs randomization, RS encoding, interleaving, trellis encoding, sync muxing, pilot insertion, demodulation, and RF up converting etc. regarding the frame where packets are combined, and outputs them through an antenna.

Meanwhile, the disparity information processing unit 470 creates information on at least one disparity of among the reference layer and overlay layer, and provides it to the mux 480. Such information may be recorded in a field predetermined in a stream.

More specifically, the information may be recorded in a PMT (Program Map Table), descriptor, and user data region etc.. Otherwise, it may be provided through an additional stream. Such disparity information may be provided to various parameters such as depth style information and depth control allowing information etc..

Hereinafter is an explanation on various examples of disparity information.

**[Table 1]**

| Overlay_plane_depth(){ | No. of bits |
|---|---|
| ... | |
| depth_control_permission | 1 |
| reserved | 7 |
| if(depth_control_permission =='1'){ | |
| depth_style_number | 4 |
| reserved | 4 |
| for(i=0; i<depth_style_number;i++){ | |
| depth_style() | |
| } | |
| .... | |
| } | |

Table 1 illustrates a syntax of information for informing a depth or disparity of the overlay layer. Depth_control_permission in table 1 is a parameter which enables direct adjusting of the depth of the overlay layer. That is, when its value is 1, the user may perform a depth adjustment. Meanwhile, when the value is 0, even if depth adjustment is possible in a playing apparatus or a display apparatus where 3D playing is possible, depth adjustment is not permitted according to a manufacturing intention of an author.

Meanwhile, the depth or disparity of the overlay layer may be provided to the receiver (that is, the display apparatus or signal processing apparatus) using a function of a depth style as illustrated below.

**[Table 2]**

| depth_style() | No.of bits |
|---|---|
| ... | |
| video_mode | 1 |
| optimized_graphic_depth | 8 |
| osd_offset | 8 |
| min_graphic_depth | 8 |
| max_graphic_depth | 8 |
| reserved | 7 |
| ... | |
| } | |

Herein, video-mode is information informing whether the mode is 2D mode or 3D mode. That is, 0 means the mode is 2D mode, whereas 1 means the mode is 3D mode.

Optimized_graphic-depth illustrates an optimal depth or disparity determined by the author, and osd_offset illustrates a depth or disparity of the OSD menu determined by the author.

In addition, min_graphic_depth illustrates a minimum depth or disparity of the overlay layer determined so that depth reverse phenomenon doesn't occur, and max_graphic_depth illustrates a maximum depth or disparity of the overlay layer for minimizing user's viewing inconvenience and optimizing cubic effect.

Meanwhile, a defining location of an overlay plane depth () as in table 1 may be the PMT descriptor portion. More specifically, the descriptor on overlay_plane_depth may be defined as in the next table.

**[Table 3]**

| overlay_plane_depth_descriptor{ | No. of bits |
|---|---|
| ... | |
| descriptor_tag | 8 |
| descriptor_length | 8 |
| overlay_plane_depth() | |
| ... | |

Overlay_plane_depth_descriptor may be defined in a same method as in table 3 in the user private region of the descriptor_tag defined in ISO/IEC 13818-1.

Besides, ES User data region may also be defined regarding overlay_plane_depth(), but there is no limitation to its regular cycle.

Meanwhile, video-mode, optimized_graphic_depth, osd_offset, min_graphic_depth, max_graphic_depth etc. in table 2 may be determined as various values.

More specifically, they may be defined as in table 4 below.

**[Table 4]**

| | |
|---|---|
| video_mode | 0(2D) |
| min_graphic_depth | 10 |
| optimized_graphic_depth | 15 |
| max_graphic_depth | 20 |
| osd_offset | 0 |

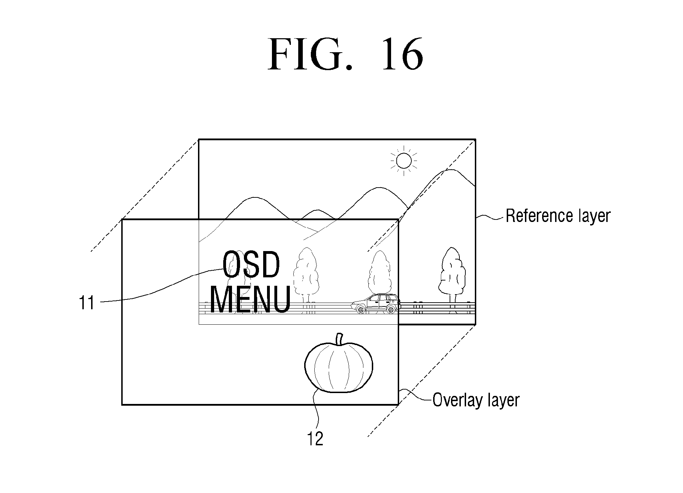

FIG. 16 illustrates a configuration of a screen in a case where the parameter is defined as in table 4. That is, when osd_offset is set to be 0 as in table 4, the OSD menu 11 is displayed on the layer where the image is displayed, that is on the reference layer. On the other hand, when min_graphic_depth is 10, the graphic object 12 is displayed on the overlay layer.

Otherwise, each parameter may be defined as in table 5 below.

**[Table 5]**

| | |
|---|---|
| video_mode | 0(2D) |
| min_graphic_depth | 0 |
| optimized_graphic_depth | 0 |
| max_graphic_depth | 0 |
| osd_offset | 10 |

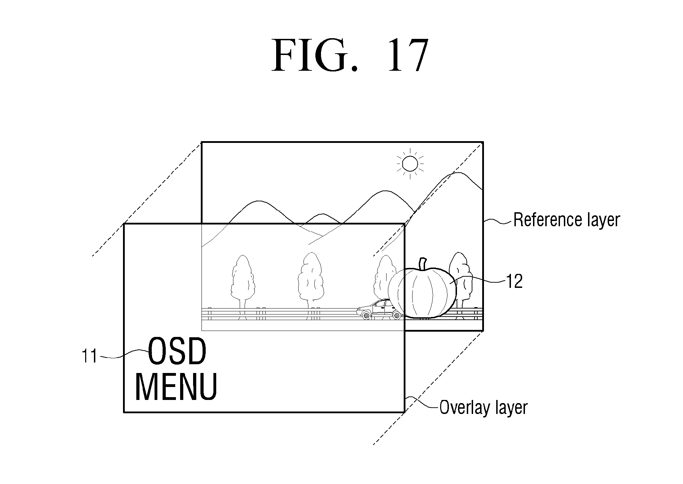

FIG. 17 illustrates a configuration of a screen in a case where the parameter is defined as in table 5. That is, when osd_offset is set as 10 as in table 5, the OSD menu 11 is displayed on the overlay layer. Meanwhile, the graphic object 12 is displayed on the reference layer.

In such a case where disparity information on the graphic object is provided from outside, various graphic objects may be displayed on at least one overlay layer or reference layer according to the disparity information.

Meanwhile, an additional PES stream may be defined in order to define the depth or disparity of the overlay layer. More specifically, a PES stream of a following format may be provided.

**[Table 6]**

| syntax | size |
|---|---|
| PES_data_field(){ | |
| data_identifier | 8 |
| while nextbits() == sync_byte{ | |
| overlay_plane_depth_segment() | |
| } | |
| end_of_PES_data_field_marker | 8 |
| } | |

Data_identifier in table 6 refers to an identifier for differentiating a stream which contains information on the depth or disparity of the overlay layer. Such an additional stream may be received to a receiver having various structures as in FIGs. 12 to 14 and be processed.

Overlay_plane_depth_descriptor in table 3 may be defined as in the following table.

**[Table 7]**

| overlay_plane_depth_descriptor{ | No. of bits |
|---|---|
| descriptor_tag | 8 |
| descriptor_length | 8 |
| depth_control_permission | 1 |
| reserved | 7 |
| } | |

According to table 7, it is possible to perform signaling on whether or not there is an overlay_plane_depth stream, and it is also possible to provide information on whether or not adjusting depth is possible.

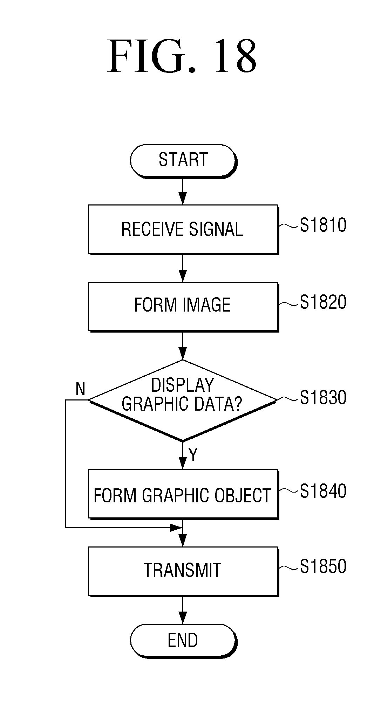

FIG. 18 is a flowchart explaining a signal processing method according to an exemplary embodiment of the present disclosure. According to FIG. 18, when a signal is received (S1810), an image is formed using the received signal (S1820).

Meanwhile, in a case where graphic data needs to be displayed (S1830), a graphic object is formed (S1840). Herein, a state where graphic data needs to be displayed may be one of various cases such as when there is a subtitle to display together with the image, when a user command for selecting an OSD menu is input, when a user command for displaying an icon or window on other applications or widgets are input etc.

Meanwhile, the graphic object is created to have a cubic effect so that it may be displayed on the overlay layer above the layer where the image is displayed. Information on the disparity of the overlay layer may be provided from outside, created inside based on the disparity of the reference layer, or created using depth information additional stored.

Accordingly, the graphic object is transmitted to an external apparatus (S1850). Herein, the external apparatus may be a display apparatus additionally provided outside the apparatus where this method is performed, or another chip within the same apparatus.

Such a signal processing method may be embodied by various methods as aforementioned. That is, different types of graphic objects may be displayed on a plurality of overlay layers, and the displaying order among the overlay layers may be changed.

Besides, although not illustrated in the flowchart, operations performed in various aforementioned apparatuses may be embodied as a signal processing method according to various exemplary embodiments of the present disclosure. This was specifically explained in the aforementioned various exemplary embodiments, and thus repeated explanation is omitted.

According to the aforementioned various exemplary embodiments of the present disclosure, it is possible to prevent the reverse phenomenon where a depth of an image and a depth of a graphic object are reversed in an apparatus where 3D playing is possible, and fatigue caused by the reverse phenomenon.

Meanwhile, a program for performing methods according to various exemplary embodiments of the present disclosure may be stored in various types of recording medium and be used.

More specifically, a code for performing the aforementioned methods may be stored in various types of recording medium readable in a terminal, such as RAM(Random Access Memory), Flash Memory, ROM(Read Only Memory), EPROM(Erasable Programmable ROM), EEPROM(Electronically Erasable and Programmable ROM), Registor, Hard disk, Removeable disk, Memory Card, USB memory, and CD-ROM.

Although a few embodiments of the present invention have been shown and described, it would be appreciated by those skilled in the art that changes may be made in this embodiment without departing from the principles and spirit of the invention, the scope of which is defined in the claims and their equivalents.

## Claims

1. A display apparatus comprising:
a video processing unit which processes a video signal and forms an image;
a graphic processing unit which processes graphic data and forms a graphic object;
a display unit for displaying the image and graphic object;
a control unit which applies different cubic effects on each of the image and graphic object, respectively, and controls the video processing unit and graphic processing unit to maintain a state where the graphic object is displayed on an overlay layer which is above a reference layer where the image is displayed.

2. The display apparatus according to claim 1, further comprising a receiving unit which receives first disparity information on the reference layer and second disparity information on the overlay layer from an external source; and wherein the control unit controls the video processing unit to apply a cubic effect to the image according to the first disparity information, and controls the graphic processing unit to apply a cubic effect to the graphic object according to the second disparity information.

3. The display apparatus according to claim 2, wherein the receiving unit receives a broadcasting signal which includes the video signal, graphic data, first disparity information and second disparity information, and
the video processing unit and graphic processing unit detect the first disparity information and second disparity information, respectively, from a program information table or user data region included in the broadcasting signal.

4. The display apparatus according to claim 1, further comprising:
a receiving unit which receives first disparity information on the reference layer from an external source; and
a disparity information creating unit which creates second disparity information on the overlay layer,
wherein the control unit controls the video processing unit to apply a cubic effect to the image according to the first disparity information, and controls the graphic processing unit to apply a cubic effect to the graphic object according to the second disparity information.

5. The display apparatus according to claim 4, wherein the disparity information creating unit creates the second disparity information based on the first disparity information, so that a disparity of the overlay layer is changed according to a disparity changing state of the reference layer and thus a depth difference between the overlay layer maintains a predetermined size.

6. The display apparatus according to claim 4, wherein the disparity information creating unit creates the second disparity information so that the overlay layer has a fixed depth.

7. The display apparatus according to claim 6, wherein the disparity information creating unit detects a maximum disparity of the reference layer within an arbitrary stream unit, and creates the second disparity information based on the detected information.

8. The display apparatus according to claim 6, wherein the disparity information creating unit detects a disparity of the reference layer at a point where the graphic object is displayed, and creates the second disparity information based on the detected information.

9. The display apparatus according to claim 1, further comprising:
a storage unit where a predetermined depth information is stored; and
a disparity information creating unit which creates first disparity information on the reference layer and second disparity on the overlay layer, according to the depth information,
wherein the control unit controls the video processing unit to apply a cubic effect to the image according to the first disparity information, and controls the graphic processing unit to apply a cubic effect to the graphic object according to the second disparity information.

10. The display apparatus according to any one of claims 1 to 9, wherein the overlay layer includes a plurality of layers each having different depths, and
a different kind of graphic object is displayed on each layer.

11. The display apparatus according to claim 10, wherein a displaying order of a type of the graphic object displayed on each layer is interchangeable according to a user's selection.

12. The display apparatus according to claim 10, wherein the graphic object includes at least one type of an OSD menu, subtitle, program information, application icon, application window, and GUI window.

13. A signal processing apparatus comprising:
a receiving unit which receives an input signal;
a video processing unit which processes a video signal included in the input signal and forms an image to be displayed on a reference layer;
an audio processing unit which processes an audio signal included in the input signal and creates sound;
a graphic processing unit which processes graphic data and forms a graphic object to be displayed on an overlay layer above the reference layer; and
an interface unit which transmits the image, sound, graphic object to an output means.

14. The signal processing apparatus according to claim 13, wherein the video processing unit detects first disparity information included in the input signal and applies a cubic effect to the image based on the first disparity information, and
the graphic processing unit detects second disparity information included in the input signal and applies a cubic effect to the graphic object based on the second disparity information.

15. The signal processing apparatus according to claim 14, further comprising:
a disparity information creating unit which creates the second disparity information on the overlay layer;
wherein the video processing unit detects the first disparity information included in the input signal and applies a cubic effect to the image based on the first disparity information, and
the graphic processing unit applies a cubic effect to the graphic object according to the second disparity information created in the disparity information creating unit.

16. The signal processing apparatus according to claim 15, wherein the disparity information creating unit creates the second disparity information based on the first disparity information, so that a disparity of the overlay layer is changed according to a disparity changing state of the reference layer and thus a depth difference between the overlay layer maintains a predetermined size.

17. The signal processing apparatus according to claim 15, wherein the disparity information creating unit creates the second disparity information so that the overlay layer has a fixed depth.

18. The signal processing apparatus according to claim 17, wherein the disparity information creating unit which detects a maximum disparity of the reference layer within an arbitrary stream unit, and creates the second disparity information based on the detected information.

19. The signal processing apparatus according to claim 17, wherein the disparity information creating unit detects a disparity of the reference layer at a point where the graphic object is displayed, and creates the second disparity information based on the detected information.

20. The signal processing apparatus according to claim 13, further comprising:
a storage unit where a predetermined depth information is stored; and
a disparity information creating unit which creates first disparity information on the reference layer and second disparity on the overlay layer, according to the depth information,
wherein the video processing unit detects first disparity information included in the input signal and applies a cubic effect to the image based on the first disparity information, and
the graphic processing unit detects second disparity information included in the input signal and applies a cubic effect to the graphic object based on the second disparity information.

21. The signal processing apparatus according to any one of claims 13 to 20, wherein the overlay layer includes a plurality of layers each having different depths, and
a different kind of graphic object is displayed on each layer.

22. The signal processing apparatus according to claim 21, wherein a displaying order of a type of the graphic object displayed on each layer is interchangeable according to a user's selection.

23. The signal processing apparatus according to claim 21, wherein the graphic object includes at least one type of an OSD menu, subtitle, program information, application icon, application window, and GUI window.

24. A signal processing method comprising:
processing a video signal and forming an image to be displayed on a reference layer;
processing graph data and forming a graphic object to be displayed on an overlay layer above the reference layer; and
transmitting the image and graphic object to an output means.

25. The signal processing method according to claim 24, further comprising receiving first disparity information on the reference layer and second disparity information on the overlay layer from an external source;
wherein the image is formed as a cubic effect is applied thereto according to the first disparity information, and the graphic object is formed as a cubic effect is applied thereto according to the second disparity information.

26. The signal processing method according to claim 25, wherein the receiving comprises:
receiving a broadcasting signal which includes the video signal, graphic data, first disparity information and second disparity information; and
detecting the first disparity information and second disparity information from a program information table or user data region included in the broadcasting signal, respectively.

27. The signal processing method according to claim 24, further comprising:
receiving first disparity information on the reference layer from an external source; and
creating second disparity information on the overlay layer,
wherein the image is formed as a cubic effect is applied thereto according to the first disparity information, and the graphic object is formed as a cubic effect is applied thereto according to the second disparity information.

28. The signal processing method according to claim 27, wherein the creating the second disparity information comprises:
analyzing the first disparity information and checking a disparity changing state of the reference layer; and
creating the second disparity information based on the first disparity information, so that a disparity of the overlay layer is changed according to a disparity changing state of the reference layer and thus a depth difference between the overlay layer maintains a predetermined size.

29. The signal processing method according to claim 27, wherein the second disparity information is created so that the overlay layer has a fixed depth.

30. The signal processing method according to claim 29, wherein the second disparity information is created based on a maximum disparity of the reference layer detected within an arbitrary stream unit.

31. The signal processing method according to claim 29, wherein the second disparity information is created based on a disparity of the reference layer detected at a point where the graphic object is displayed.

32. The signal processing method according to claim 24, further comprising:
reading the depth information from a storage unit where a predetermined depth information is stored; and
creating first disparity information on the reference layer and second disparity information on the overlay layer, according to the depth information,
wherein the image is formed as a cubic effect is applied thereto according to the first disparity information, and the graphic object is formed as a cubic effect is applied thereto according to the second disparity information.

33. The signal processing method according to any one of claims 24 to 32, wherein the overlay layer includes a plurality of layers each having different depths, and
a different kind of graphic object is displayed on each layer.

34. The signal processing method according to claim 33, wherein a displaying order of a type of the graphic object displayed on each layer is interchangeable according to a user's selection.

35. The signal processing method according to claim 33, wherein the graphic object includes at least one type of an OSD menu, subtitle, program information, application icon, application window, and GUI window.
